# EUROPEAN PATENT SPECIFICATION

(11) **EP 0 663 895 B1**
(45) Date of publication and mention of the grant of the patent: **29.01.1997**
(21) Application number: 93922025.7
(22) Date of filing: 07.10.1993
(51) Int. Cl.: C04B 41/00, E04G 23/02

(54) **ELECTROCHEMICAL TREATMENT OF REINFORCED CONCRETE**
ELEKTROCHEMISCHE BEHANDLUNG VON BEWEHRTEM BETON
TRAITEMENT ELECTROCHIMIQUE DU BETON ARME

(30) Priority: 08.10.1992 GB 9221143
(43) Date of publication of application: 26.07.1995
(73) Proprietor: MARTECH SERVICES LIMITED, Sawtry, Cambridgeshire PE17 5SZ (GB)
(72) Inventor: HAMMOND, Andrew Duncan, Hitchin, Hertfordshire SG4 9SX (GB)
(74) Representative: Morton, Colin David
(86) International application number: GB9302080
(87) International publication number: WO9408916

(56) References cited:
- EP-A- 0 398 117
- DE-A- 2 524 589
- FR-A- 2 365 666
- FR-A- 2 453 446
- US-A- 4 886 590
- US-A- 5 141 607

## Description

### Field of the Invention

This invention relates to the electrochemical treatment of reinforced concrete by realkalisation or desalination. The invention is not concerned with cathodic protection.

### Background to the Invention

The most common cause of deterioration of reinforced concrete is corrosion of the reinforcing steel bars. During corrosion iron oxides are formed which occupy a greater volume than the constituent steel. The pressure caused by the expansion leads to spalling (cracking) of the concrete surrounding the corroded reinforcing bar.

The reinforcing steel bars are normally passivated, chemically inert, when embedded in concrete. This is due to the alkalinity of the pore water within the concrete which allows a passivated layer of iron oxide to exist on the steel surface. This protects the steel from chemical attack. There are two main mechanisms by which this passivity can be destroyed, carbonation and chloride attack.

In carbonation, carbon dioxide from the atmosphere is absorbed and dissolved in the concretes pore water to form carbonic acid. This acid reacts with the alkaline calcium hydroxide present in the concrete, producing calcium carbonate and water. As the calcium hydroxide is consumed the alkalinity of the concrete drops. This in turn causes the passivating layer of iron oxide to break down and the now unprotected steel corrodes due to the presence of oxygen and water within the concrete pores. Realkalisation is highly effective in the treatment of reinforced concrete which has been damaged by the natural process of carbonation. Typically, an anode grid is applied to the external surface of the concrete which is then encapsulated with a cellulose fibre hydrated with a sodium carbonate electrolyte. A series of electrical connections is made to the steel reinforcement, which acts as a cathode and in this way positively charged sodium ions are attracted towards the steel reinforcement, and pH level is restored.

The presence of chlorides in the concrete is the other main cause of corrosion. The chloride ions attack the passivating layer of iron oxide, despite the alkaline environment and help break it down. This occurs when the chloride concentration exceeds 0.6 of the hydroxyl concentration. Furthermore, the chloride ions are not consumed but only act as catalysts in speeding up corrosion.

Desalination is used to restore concrete where excessive chloride salts have contaminated the concrete either at the construction stage or by later ingress. The process closely resembles realkalisation in reverse but with water as the electrolyte. A potential is applied across the electrical connection, attracting the negatively charged chloride ions to migrate towards the external anode.

One popular form of implementing electrochemical treatment is to use a temporary anode made of titanium mesh for chloride removal in desalination or steel mesh for realkalisation. The anode system consists of papier mache applied as a layer before and after securing the anode mesh to the concrete surface. This is kept wet (with water) for the duration of the treatment. A d.c. power supply is used to create the necessary electrical conditions. Its positive terminal is connected to the temporary anode mesh, whilst its ground terminal is connected to the reinforcing steel bars. Anode and cathode connections are made at regular intervals across the concrete surface to ensure even current densities and care must be taken in ensuring electrical continuity between the anode and cathode. In particular, short and open circuits must be avoided and each anode/cathode connection must be adjusted for similar resistance.

The absolute end point of electrochemical treatment is determined by chemical analysis of the concrete. However, a good indication can be obtained by monitoring the electrical parameters of the concrete. For example, in realkalisation the resistance of the concrete falls as the process progresses. A constant resistance condition is reached which is characteristic of realkalisation completion. In desalination, the degree of chloride removal is related to the amount of electrical charge passed through the concrete, among other things.

As presently implemented, electrochemical treatment requires skilled operators to set up the correct electrical conditions and de-bug the system if necessary. Furthermore, manual monitoring of both the electrical parameters of the process and its physical set-up is necessary to ensure smooth progress of the process.

EP 0398117 discloses a process for treating internally reinforced concrete by removal of chlorides. A cellulosic pulp is sprayed onto the surface of the concrete area to be treated. A distributed electrode such as a wire grid is embedded in the electrolytic coating, and a voltage source is connected between reinforcing bars in the concrete and the distributed electrode. EP 0398117 mentions periodic interruption of the voltage source under automatic control through simple microprocessor circuitry but does not disclose how this is achieved and does not disclose automation of treatment and monitoring.

The aim of the present invention is two-fold. Firstly, to de-skill the setting up of the electrical conditions necessary for electrochemical treatment, and secondly, to automate the monitoring and measurement of the salient electrical parameters during treatment.

### Disclosure of the Invention

According to one aspect of the invention there is provided a system for electrochemical treatment of reinforced concrete, comprising power supply means for delivering electrical power to the concrete, wherein the power supply means comprise a plurality of power supply units for delivering electrical power to respective areas of the concrete, each power supply unit having a microprocessor controlling the electrical power delivered to the corresponding area of concrete, and control means linked to the power supply units for controlling the microprocessors and thereby controlling the application of electrical power from the power supply units to the concrete to enable the magnitude of the current applied to the concrete to be maintained substantially constant in the respective areas, wherein each microprocessor has a store operative to store information concerning the power delivered by the corresponding power supply unit, and the control means is operative to access the stored information to obtain a record of the power delivered as a function of time.

The control means may include a computer programmed to control the power supply units, and the computer preferably communicates with each power supply unit by means of a hard wired link, although radio links may be possible.

In a preferred embodiment, the computer is connected to a communications multiplexer which in turn is connected to the power supply units in a daisy chain or star configuration. Each power supply unit may have an output connected by a plurality of resistors in parallel to respective anode connections, the voltage drop across each resistor being measured to enable the current flowing to each anode connection to be derived.

According to another aspect of the invention there is provided a method of electrochemical treatment of reinforced concrete by use of a system according to said one aspect, wherein the method comprises connecting a plurality of power supply units to respective areas of the concrete, controlling the application of electrical power to the concrete so that the magnitude of the current applied to the concrete is maintained substantially constant, storing information concerning the power delivered by each power supply unit to the corresponding area of concrete and accessing the stored information to obtain a record of the power delivered as a function of time.

A system and method according to the invention will now be described, by way of example, with reference to the accompanying drawings, in which:
**Figure 1** is a block diagram of the system,
**Figure 2** is a circuit diagram of one of the power supply units illustrated in Figure 1,
**Figure 3** shows parallel resistors connected to the output of each power supply unit, and
**Figure 4** shows diagrammatically how a microprocessor of each power supply unit performs its functions.

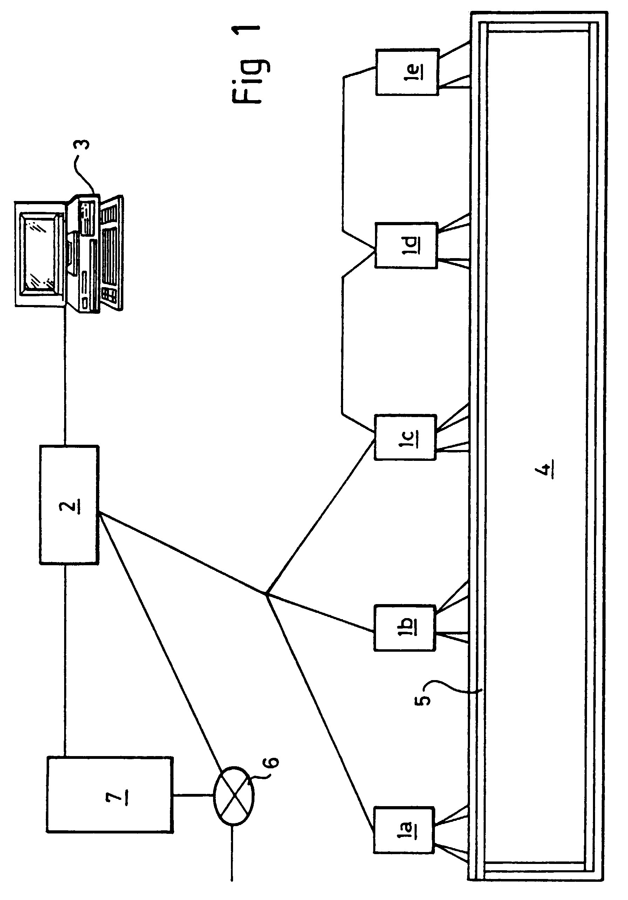

Referring to Figure 1, the system effects treatment by realkalisation and comprises a plurality (in the example illustrated, five) d.c. power control units 1a to 1e connected in a star configuration (as 1a, 1b, 1c) or in a daisy chain configuration (as 1c, 1d, 1e) to a communications multiplexer 2. The multiplexer 2 is in turn connected to a computer 3, either directly or via a modem for long distance remote control. Each power control unit has anode and cathode outlet connections, the anode connections being connected to an anode net 4 placed against the concrete to be treated, and the cathode connections being made to the steel reinforcing bar in the concrete. An irrigation unit 5 is supplied with electrolyte, in this case sodium carbonate, which irrigates the anode net 4 and is supplied thereto by a pump 6. Calcium carbonate can be used as the electrolyte. The pump 6 is fed from a reservoir 7 of electrolyte and is controlled from the computer 3 through the multiplexer 2. The reservoir may incorporate means for detecting chloride level, in order to monitor treatment.

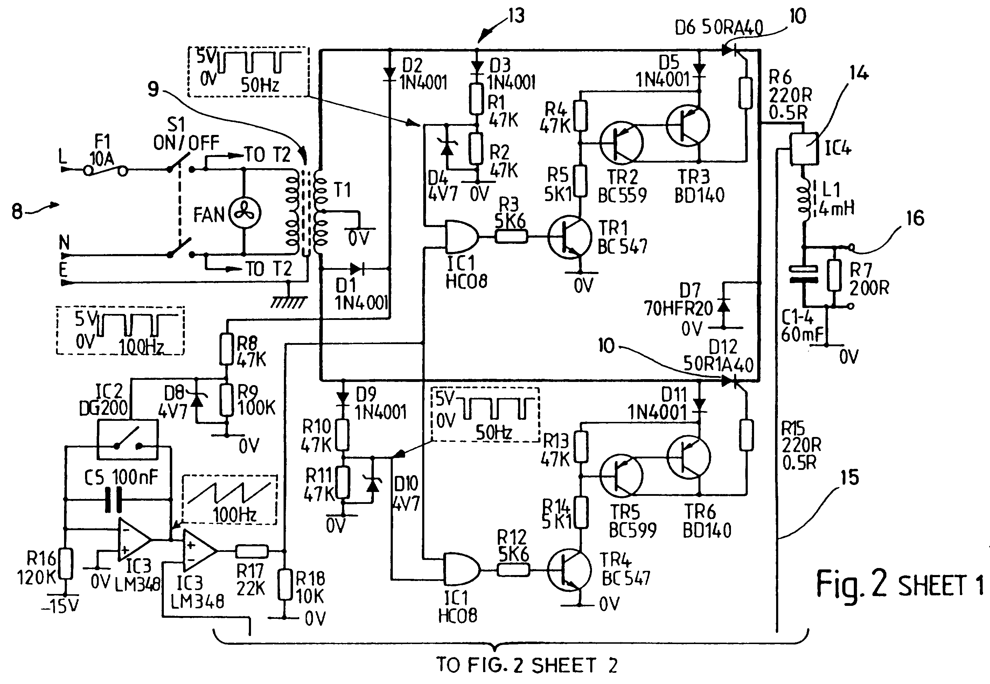

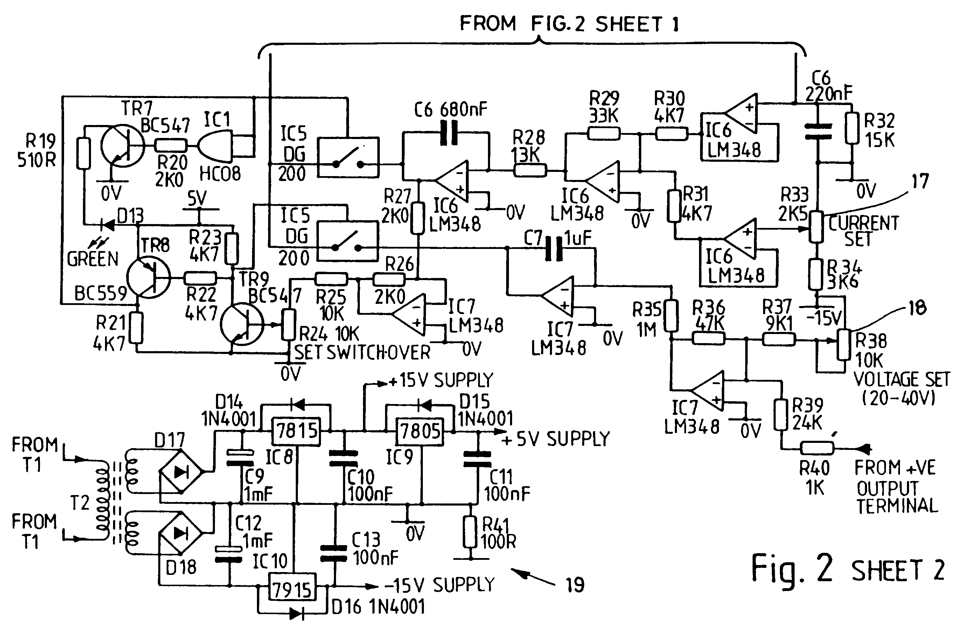

Referring to Figure 2, each power supply unit is powered from a single phase 240v, 50Hz mains supply 8. The supply is connected to the primary of a transformer 9 having a centre-tapped secondary feeding two thyristors 10 which modulate and rectify the input signal. Smoothing filters 13 remove the unwanted a.c. component from the output. The output current is maintained by a Hall effect sensor 14 which, through a feedback loop 15, controls the firing angle of the thyristors 10 to maintain the output current (from output 16) at a preset level, preferably 1 ampere per square metre of anode. This level can be set manually, by a current set knob 17, and the output voltage may similarly be set manually by a voltage set knob 18. However, output current and voltage are preferably controlled automatically, the power supply unit having a microprocessor which is controlled by the computer 3.

A subsidiary circuit 19, powered from the transformer 9, has voltage outputs which are used to ensure that the datum voltage of the power supply unit is at the same potential as the concrete being treated.

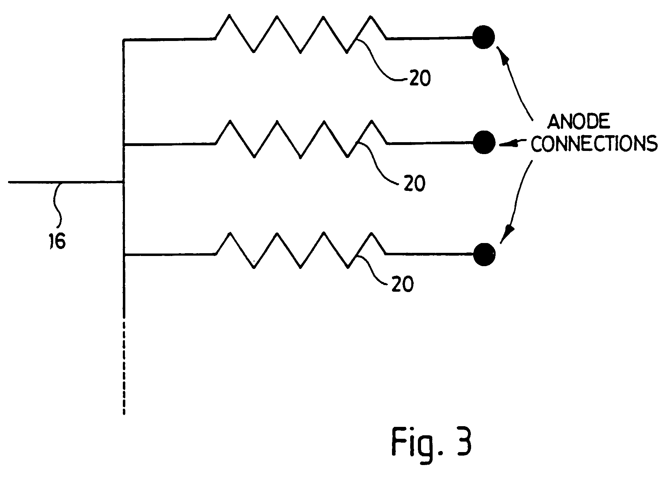

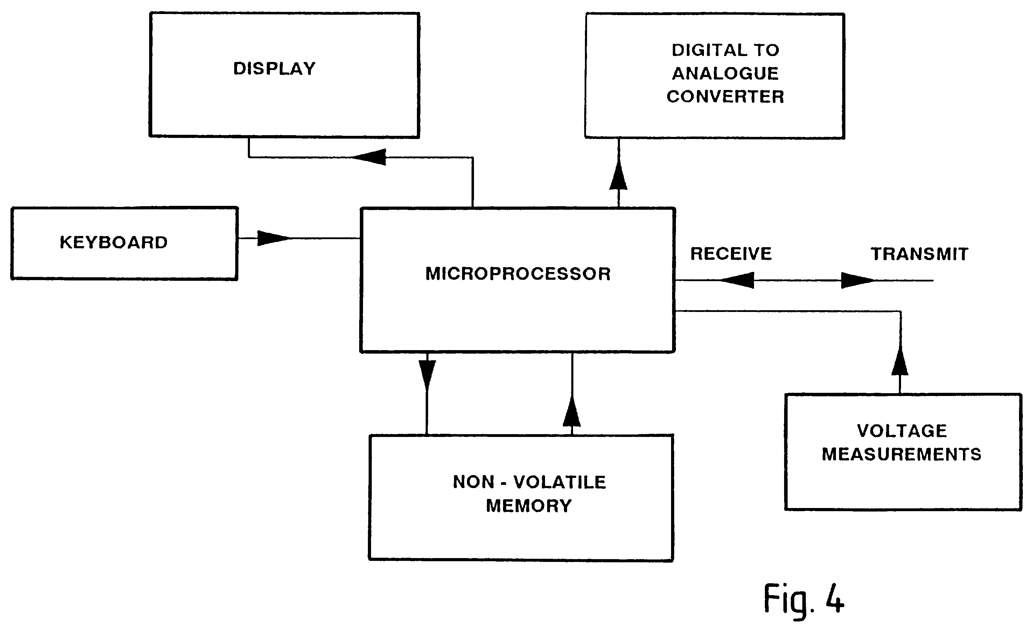

To achieve the purpose of this invention the following extra circuit features are incorporated.
a) The output from each power supply unit is split into parallel paths each of which incorporates a series resistor 20 as shown in Figure 3. Each path forms a separate anode connection. The voltage drop across each resistor 20 can be measured and hence the current flowing in each anode connection determined. This enables short or open circuit conditions to be identified.
b) The current set circuitry which is manually adjusted by knob 17 is supplemented or replaced by a digital to analogue converter which allows for digital programming.
c) The microprocessor in each power supply unit sets the D to A converter, determines the anode currents and anode/cathode potential and stores this data in non volatile memory at regular intervals. The microprocessor accepts instructions from the computer 3 on the set-up conditions, via the communications multiplexer 2, and transfers measurement data to the computer 3 upon request. Lastly, it controls the power supply display and keyboard (Figure 4) should manual operation be desired. The links between the microprocessor and the above functions are shown in Figure 4.

The communications multiplexer 2 is a unit which links the serial port of the computer 3 to one or more power supply units 1a to 1e. It is possible to provide for communication over a bus such as GPIB. This however limits both the number of power supply units in a system and also the distance between the computer and the power supply units to either 1 power supply unit at a distance of 15 metres or 15 power supply units separated by 1 meter cables.

Normally, a computer can only interface with one unit over its serial port. The port connections include a transmit connection, receive connection, ground connection and control connections. To overcome the problem of single unit interface, the communications multiplexer has one port compatible with the computers serial link. Its other port connects to the multiplicity of power supply units in a star or daisy chain fashion. The power supply units only have two connections, namely a ground connection and a transmit/receive connection. When the computer is transmitting information all power supply units receive it but only the one addressed acts upon it. When the computer requests information, the addressed power supply unit provides it. All communication is serial in time, the computer never transmits and receives simultaneously.

This communication system is low cost and does not limit either the number of power supply units or the distance between the power supply units and the computer.

The computer 3 is programmed with expert software. The expert software can reside on any computer with a serial port which can be connected directly or via a MODEM to the communications multiplexer. It performs the following functions.
a) Guides the operator through the set-up process and from the electrical parameter measurements directs the debugging process.
b) Sets up the power supply units and adjusts their settings as necessary.
c) Monitors the electrical parameter changes during the process and instructs the operator if unexpected behaviour occurs.
d) Controls automatic electrolyte application system if present or instructs operator to apply electrolyte when needed.
e) Instructs operator of process completion and generates process reports. As realkalisation proceeds, sodium ions dissociate and are attracted towards the cathode. Soon after the system is powered up, there is a drop in resistance between the anode and the cathode. Simultaneously, hydroxyl ions are formed at the cathode which further increases the alkalinity in the vicinity of the steel reinforcement. Because the pH has been raised to a level which prevents the formation of corrosion produced, the further decay is arrested. Long term durability is achieved due to the alkalinity of the electrolyte in the cover concrete.

A system according to the invention may effect treatment by desalination. For desalination, the system would be similar to that of Figure 1, but the electrolyte would be water instead of sodium (or calcium) carbonate. For example, to desalinate a concrete mullion (with internal steel reinforcement) of a concrete building by the invention, polycarbonate panels are mounted in spaced relationship to the exposed mullion surfaces to define a tank (or shuttered enclosure) around the exposed surfaces of the mullion. An anode mesh is suspended within the tank and the tank is filled with water to form the electrolyte. Units identical to units 1a to 1e, but now serving as desalination units instead of realkalisation units, are connected to the anode. The steel reinforcement becomes the cathode. The units are linked to a multiplexer and remote computer in a manner similar to Figure 1. The system ensures that a substantially uniform current density of 1 ampere per square metre is applied to the anode. As treatment proceeds, the chloride ions are attracted towards the positively charged anode and the resistance between the anode and the cathode drops. The chloride ions pass into the water which is charged on a regular basis. Because the chloride ion concentrations at the steel reinforcement in the concrete is reduced (by in excess of 95%) the alkalinity increases around the steel reinforcement and a durable repair is achieved.

The invention enables the setting up and operation of electrochemical treatment of reinforced concrete to be accurately controlled and monitored. Individual currents and voltages applied to the concrete are not only accurately controlled, in accordance with a predetermined program in the computer, but the applied currents, voltages and Ampere/hours are also stored, so that the history of the treatment is preserved and can be used to modify ongoing treatment, as necessary, and to terminate treatment automatically. Isolated locations can be treated reliably and simultaneously. After realkalisation or desalination by the invention, the components of the system are removed, leaving a durable repair.

It is also a feature of an expert management system according to the invention that it allows the current supply to the anode to be phased, in that selection is possible for periods of rest and predetermined intervals during both realkalisation and desalination treatment time.

This facility allows the migration of produced hydroxyl ions away from the reinforcement and, therefore, reduces the very high pH established during prolonged application of the system.

Furthermore, another facility is available to calculate the amount of hydroxyl ions generated during the treatment period based on the physical properties of the concrete, the nature capability to predict the diffusion of generated ions away from the steel reinforcement after treatment based on Fick's 2nd law of diffusion.

Because of the nature of the expert system, it is possible to have a virtually infinite selection of application of power and rest period during any particular treatment.

## Claims

1. A system for electrochemical treatment of reinforced concrete, comprising power supply means for delivering electrical power to the concrete, wherein the power supply means comprise a plurality of power supply units (1a, 1b, 1c...) for delivering electrical power to respective areas of the concrete, each power supply unit having a microprocessor controlling the electrical power delivered to the corresponding area of concrete, and control means (2, 3) linked to the power supply units for controlling the microprocessors and thereby controlling the application of electrical power from the power supply units to the concrete to enable the magnitude of the current applied to the concrete to be maintained substantially constant in the respective areas, wherein each microprocessor has a store operative to store information concerning the power delivered by the corresponding power supply unit, and the control means is operative to access the stored information to obtain a record of the power delivered as a function of time.

2. A system according to claim 1, wherein each microprocessor includes non-volatile memory in which is stored at time intervals the output current and the anode/cathode potential.

3. A system according to claim 1 or 2, wherein the control means comprises a computer programmed to control the power supply units.

4. A system according to claim 3, wherein the computer communicates with each power supply unit by means of hard wiring.

5. A system according to claim 3 or 4, wherein the computer is connected to a communications multiplexer which in turn is connected to the power supply units in a daisy chain or star configuration.

6. A system according to any of the preceding claims, wherein each power supply unit has an output connected by a plurality of resistors in parallel to respective anode connections, the voltage drop across each resistor being measured to enable the current passing to each anode connection to be derived.

7. A system according to claim 6, wherein the output current of each power supply unit is settable electronically by means of the microprocessor under the control of the control means.

8. A system according to any of the preceding claims, wherein each power supply unit includes a Hall effect sensor for determining the output current of the power supply unit.

9. A system according to claim 8, wherein the output of the Hall effect sensor is applied to a feedback loop which acts to maintain the output current of the corresponding power supply unit at a preset level, or within preset limits.

10. A system according to claim 9, wherein the output current is varied by thyristors the firing angle of which is controlled in the feedback loop by the output of the Hall effect sensor.

11. A system according to any of the preceding claims, wherein each power supply unit is powered by single phase mains supply.

12. A system according to any of the preceding claims and including a pump for pumping electrolyte over an anode net to which the outputs of the power supply units are connected.

13. A system according to claim 12, wherein the pump is controlled by the control means, so that supply of electrolyte is coordinated with control of the power supply units.

14. A method of electrochemical treatment of reinforced concrete by use of a system according to any of claims 1 to 13, wherein the method comprises connecting a plurality of power supply units to respective areas of the concrete, controlling the application of electrical power to the concrete so that the magnitude of the current applied to the concrete is maintained substantially constant, storing information concerning the power delivered by each power supply unit to the corresponding area of concrete and accessing the stored information to obtain a record of the power delivered as a function of time.

## Patentansprüche

1. Ein System zur elektrochemischen Behandlung von Eisenbeton mit Energieversorgungsmitteln zum Zuführen elektrischer Energie zum Beton, wobei die Energieversorgungsmittel eine Vielzahl von Energieversorgungseinheiten (la, 1b, 1c ...) zum Zuführen von elektrischer Energie zu den jeweiligen Flächen des Betons aufweisen, jede Energieversorgungseinheit einen die der jeweiligen Fläche des Betons zugeführte elektrische Energie steuernden Mikroprozessor und an die Energieversorgungseinheiten angeschlossene Steuermittel (2, 3) zum Steuern der Mikroprozessoren und damit zum Steuern der Zufuhr von elektrischer Energie von den Energieversorgungseinheiten zum Beton aufweist, um damit die Stärke des dem Beton zugeführten Stromes in den jeweiligen Flächen im wesentlichen konstant zu halten, wobei jeder Mikroprozessor einen Speicher aufweist, der eine Information betreffend der durch die entsprechende Energieversorgungseinheit zugeführten Energie speichert und das Steuermittel zum Erzielen einer Aufzeichnung der zugeführten Energie als eine Funktion der Zeit Zugang zu der gespeicherten Information hat.

2. Ein System nach Anspruch 1, wobei jeder Mikroprozessor einen nichtflüchtigen Speicher enthält, in dem in Zeitabständen der Ausgangsstrom und das Anoden/Kathoden-Potential abgespeichert wird.

3. Ein System nach Anspruch 1 oder 2, wobei das Steuermittel einen auf das Steuern der Energieversorgungseinheiten programmierten Computer enthält.

4. Ein System nach Anspruch 3, wobei der Computer mit jeder Energieversorgungseinheit über eine feste Verdrahtung kommuniziert.

5. Ein System nach Anspruch 3 oder 4, wobei der Computer an einen Kommunikations-Multiplexer angeschlossen ist, der seinerseits in einer Verkettung oder einem Sternnetzwerk an die Energieversorgungseinheiten angeschlossen ist.

6. Ein System nach irgendeinem der vorhergehenden Ansprüche, wobei jede Energieversorgungseinheit einen über eine Vielzahl von Widerständen parallel an jeweilige Anodenanschlüsse angeschlossenen Ausgang aufweist und der Spannungsabfall über jedem Widerstand zum Ermöglichen des Ableitens des zu jedem Anodenanschluß fließenden Stromes gemessen wird.

7. Ein System nach Anspruch 6, wobei der Ausgangsstrom jeder Energieversorgungseinheit mit dem Mikroprozessor unter der Steuerung der Steuermittel elektronisch einstellbar ist.

8. Ein System nach irgendeinem der vorhergehenden Ansprüche, wobei jede Energieversorgungseinheit einen Halleffekt-Sensor zum Bestimmen des Ausgangs stromes der Energieversorgungseinheit enthält.

9. Ein System nach Anspruch 8, wobei die Ausgabe des Halleffekt-Sensors an eine Rückkopplungsschleife angelegt wird, die den Ausgangsstrom der entsprechenden Energieversorgungseinheit auf einer voreingestellten Höhe oder in voreingestellten Grenzen hält.

10. Ein System nach Anspruch 9, wobei der Ausgangsstrom durch Thyristoren verändert wird, deren Zündwinkel in der Rückkopplungsschleife durch die Ausgabe des Halleffekt-Sensors gesteuert wird.

11. Ein System nach irgendeinem der vorhergehenden Ansprüche, wobei jede Energieversorgungseinheit durch einen einphasigen Netzanschluß gespeist wird.

12. Ein System nach irgendeinem der vorhergehenden Ansprüche und enthaltend eine Pumpe zum Pumpen von Elektrolyt über ein Anodennetz, an das die Ausgänge der Energieversorgungseinheiten angeschlossen sind.

13. Ein System nach Anspruch 12, wobei die Pumpe durch das Steuermittel gesteuert wird, so daß die Zufuhr des Elektrolyten mit der Steuerung der Energieversorgungseinheiten koordiniert wird.

14. Ein Verfahren zur elektrochemischen Behandlung von Eisenbeton durch Verwenden eines Systems nach irgendeinem der Ansprüche 1 bis 13, wobei das Verfahren das Anschließen einer Vielzahl von Energieversorgungseinheiten an jeweilige Flächen des Betons, das Steuern des Anlegens der elektrischen Energie an den Beton, so daß die Stärke des an den Beton angelegten Stromes im wesentlichen konstant gehalten wird, das Speichern von Information betreffend der durch jede Energieversorgungseinheit einer entsprechenden Fläche des Betons zugeführten Energie und den Zugang zu der gespeicherten Information zum Erzielen einer Aufzeichnung der zugeführten Energie als eine Funktion der Zeit umfaßt.

## Revendications

1. Système de traitement électrochimique du béton armé, comprenant des moyens d'alimentation pour délivrer de la puissance électrique à ce béton, dans lequel les moyens d'alimentation comprennent une pluralité d'unités d'alimentation (1a, 1b, 1c...) pour délivrer cette puissance à des zones respectives du béton, chaque unité comportant un micro-ordinateur contrôlant la puissance électrique délivrée à la zone correspondante du béton et des moyens de commande (2, 3), reliés aux unités d'alimentation, contrôlant ces micro-ordinateurs et contrôlant ainsi la transmission de puissance électrique des unités d'alimentation au béton, pour permettre à l'intensité du courant appliqué au béton d'être maintenue sensiblement constante dans les zones respectives, système dans lequel chaque microprocesseur possède une mémoire pour stocker les informations concernant la puissance délivrée par l'unité d'alimentation correspondante, les moyens de commande pouvant accéder à l'information mémorisée pour obtenir un enregistrement de la puissance délivrée en fonction du temps.

2. Système selon la revendication 1, dans lequel chaque microprocesseur comprend des mémoires non-volatiles dans lesquelles sont stockées, à intervalles de temps, le courant de sortie et le potentiel anode/cathode.

3. Système selon la revendication 1 ou 2, dans lequel les moyens de commande comprennent un ordinateur, programmé pour contrôler les unités d'alimentation.

4. Système selon la revendication 3, dans lequel l'ordinateur communique avec chaque unité d'alimentation au moyen de connexions câblées.

5. Système selon la revendication 3 ou 4, dans lequel l'ordinateur est connecté à un multiplexeur de communications qui est à son tour connecté aux unités d'alimentation dans une configuration en chaîne ou en étoile.

6. Système selon l'une quelconque des revendications précédentes, dans lequel chaque unité d'alimentation possède une sortie reliée par une pluralité de résistances en parallèle à des connexions d'anode respectives, la chute de tension dans chaque résistance étant mesurée pour permettre au courant, passant dans chaque connexion d'anode, d'en être déduit.

7. Système selon la revendication 6, dans lequel le courant de sortie de chaque unité d'alimentation est réglable électroniquement au moyen du micro-ordinateur, sous le contrôle des moyens de commande.

8. Système selon l'une quelconque des revendications précédentes, dans lequel chaque unité d'alimentation inclut un capteur à effet Hall pour déterminer le courant de sortie de cette unité.

9. Système selon la revendication 8, dans lequel la sortie du capteur à effet Hall est appliquée à une boucle de contre-réaction qui agit pour maintenir le courant de sortie de l'unité d'alimentation correspondante à un niveau préréglé, ou dans des limites préréglées.

10. Système selon la revendication 9, dans lequel le courant de sortie est modifié par des thyristors dont l'angle d'amorçage est contrôlé dans la boucle de contre-réaction, par la sortie du capteur à effet Hall.

11. Système selon l'une quelconque des revendications précédentes, dans lequel chaque unité d'alimentation reçoit de l'énergie par le secteur monophasé.

12. Système selon l'une quelconque des revendications précédentes, incluant une pompe pour transporter l'électrolyte vers un réseau d'anodes auquel les sorties des unités d'alimentation sont connectées.

13. Système selon la revendication 12, dans lequel la pompe est contrôlée par les moyens de commande, de façon que l'alimentation en électrolyte soit coordonnée avec la commande des unités d'alimentation.

14. Méthode de traitement électrochimique de béton armé par utilisation d'un système selon l'une quelconque des revendications 1 à 13, qui comprend la connexion d'une pluralité d'unités d'alimentation aux zones respectives du béton, la commande de l'application de puissance électrique au béton de sorte que l'amplitude du courant appliqué soit maintenue sensiblement constante, le stockage d'informations concernant la puissance délivrée par chaque unité d'alimentation à la zone correspondante du béton et l'accès à l'information stockée pour obtenir un enregistrement de la puissance délivrée en fonction du temps.
